# EUROPÄISCHE PATENTSCHRIFT

(11) **EP 0 483 602 B1**
(45) Veröffentlichungstag und Bekanntmachung des Hinweises auf die Patenterteilung: **31.05.1995**
(21) Anmeldenummer: 91117675.8
(22) Anmeldetag: 16.10.1991
(51) Int. Cl.: F16K 17/04, F16K 17/08

(54) **Sicherheitsventil**
Safety valve
Clapet de sécurité

(30) Priorität: 30.10.1990 DE 4034531
(43) Veröffentlichungstag der Anmeldung: 06.05.1992
(73) Patentinhaber: SIEMENS AKTIENGESELLSCHAFT, 80333 München (DE)
(72) Erfinder: Schabert, Hans-Peter, Dipl.-Ing., W-8520 Erlangen (DE); Jezussek, Alfons, Dipl.-Ing., W-8520 Erlangen (DE); Stecher, Willi, Dipl.-Ing., W-8560 Lauf (DE); Wintermann, Benedikt, Dipl.-Ing., W-8520 Erlangen/Buckenhof (DE)

(56) Entgegenhaltungen:
- FR-A- 1 159 335
- US-A- 3 282 289
- US-A- 3 425 444
- US-A- 4 130 130
- TÜV-Handbuch 1 " Rohrleitungen in Kraftwerken" , TÜV-Rheinland, Köln 1978, s. 47

## Beschreibung

Die Erfindung bezieht sich auf ein Sicherheitsventil gemäß dem Oberbegriff des Hauptanspruches.

Bei Sicherheitsventilen für Wasserdampf können kleine Leckagen unterhalb des Ansprechdrucks zu örtlicher Abkühlung im Dichtsitz führen. Diese Abkühlung verursacht eine lokale thermische Kontraktion und Deformation des Dichtsitzes. Dies kann zu einer erhöhten Leckage führen, die infolge der dadurch intensivierten Kühlwirkung des expandierenden Leckdampfes weiter zunehmen kann.

Die durch Kühlwirkung des expandierenden Leckdampfes entstehende Erhöhung der Leckage tritt dabei insbesondere bei Hochhub-Sicherheitsventilen auf, wie sie insbesondere aus dem TÜV-Handbuch 1 "Rohrleitungen in Kraftwerken", TÜV Rheinland, Köln 1978, S. 47, Figur 42, vgl. Oberbegriff des Anspruchs 1, bekannt sind. Bei diesem bekannten Hochhub-Sicherheitsventil wird der Dichtsitz von einem rohrförmigen Umlenkkörper umgeben, der den beim Ansprechen abgeblasenen Dampf in eine entlang der Außenseite der Sitzbuchse gerichtete Strömung umlenkt, um zur Huberhöhung eine zusätzliche Kraftkomponente auf das federbelastete Verschlußstück zu erzeugen. Dieser Umlenkkörper wirkt auch auf eine etwaige Leckdampfströmung und führt diese ebenfalls auf die Außenseite der Ventilsitzbuchse. Dort verursacht der durch Expansion abgekühlte Leckdampf eine Abkühlung mit der thermische Formänderungen einhergehen, die das anfängliche Leck verstärken. Die Kühlwirkung des austretenden Dampfes ist insbesondere bei Hochhub-Sicherheitsventilen für den Primärkreis von Druckwasserreaktoren ausgeprägt, weil dort die gedrosselte Entspannung an der Sattdampflinie bei etwa 175 bar beginnt und bei Umgebungsdruck im im Naßdampfgebiet endet. Durch den Nässeanteil im Leckdampf wird die Kühlwirkung zusätzlich intensiviert.

Durch das US-Patent 4,130,130 ist eine Ventilanordnung bekannt, bei der die Sitzbuchse eines Ventils von einer Hülse umfaßt ist. Diese Hülse liegt über ein Innengewinde eng am Umfang des oberen Endes der Sitzbuchse des Ventils, dessen Sitzfläche sie überragt. Dadurch hat diese Hülse zwar einen wesentlichen Einfluß auf den Strömungsverlauf im Bereich der Sitzfläche des Ventils, aber andererseits ist die Hülse über das an der Sitzbuchse des Ventils anliegende Gewinde thermisch eng an diese gekoppelt.

Der Erfindung liegt nun die Aufgabe zugrunde, ein Sicherheitsventil für Wasserdampf anzugeben, bei dem auch bei Auftreten kleiner Leckagen eine Erhöhung der Leckage weitgehend vermieden ist.

Die genannte Aufgabe wird erfindungsgemäß gelöst mit den Merkmalen des Hauptanspruches. Durch die thermische Isolation der Außenseite der Sitzbuchse gegen den Strömungskanal wird die unmittelbar auf die Sitzbuchse ausgeübte Kühlwirkung verringert und die mechanische Formänderung der Sitzbuchse im Bereich des Dichtsitzes wird begrenzt.

Besonders vorteilhaft ist die thermische Isolation der Sitzbuchse bei einem Hochhub-Sicherheitsventil mit einem Strömungskanal, der durch einen die Sitzbuchse im Bereich ihrer Sitzfläche umgebenden Umlenkkörper gebildet wird und der den an der Sitzfläche austretenden Dampf in eine Strömung mit einer parallel zur Längsachse der Sitzbuchse gerichteten Strömungskomponente umlenkt.

In einer bevorzugten Ausführungsform ist die Sitzbuchse wenigstens im Bereich des Strömungskanals von einer Isolierhülse umgeben. Die Isolierhülse kann aus dem gleichen Werkstoff wie die Sitzbuchse bestehen. Da die Isolierhülse und die Sitzbuchse voneinander getrennte Einzelteile sind, ist zwar schon bei einem Paßsitz der Isolierhülse auf der Sitzbuchse eine merkliche Verringerung des Wärmeübergangs auf die Sitzbuchse gewährleistet, aber zur Erhöhung der Wärmeisolation ist zwischen der Isolierhülse und der Sitzbuchse ein Luftspalt vorgesehen. Dieser Luftspalt ist vorzugsweise durch eine Dichtlippe vom Strömungskanal getrennt.

Diese Dichtlippe wird in einer vorteilhaften Ausführungsform durch einen Bund am Innenrand der Isolierhülse gebildet.

In einer weiteren bevorzugten Ausführungsform ist die Wandstärke der Isolierhülse im Bereich der Dichtlippe kleiner als im restlichen Bereich und insbesondere kleiner als die halbe Wandstärke der Sitzbuchse an ihrem dem Verschlußstück zugewandten Ende. Dadurch ergibt sich ein federnder Sitz der Dichtlippe am Außenumfang der Sitzbuchse und somit eine erhöhte Dichtwirkung.

In einer bevorzugten Ausgestaltung der Erfindung ist auch das Verschlußstück mit einer thermisch isolierenden Kappe versehen und durch diese vor der Kühlwirkung des Leckdampfes geschützt.

Die Gefahr einer durch thermische Kontraktion der Sitzbuchse erhöhten Leckage wird besonders dann verringert, wenn die Sitzbuchse in ihrem dem Ventilsitz zugewandten Bereich die Gestalt eines Hohlzylinders hat, dessen Höhe wenigstens etwa das 0,6-fache des Innendurchmessers und dessen Wandstärke weniger als das 0,2-fache seines Innendurchmessers beträgt. Der hohlzylindrische Teil geht vorzugsweise in einen Grundkörper mit einem Übergangsradius über, der größer ist als deren Wandstärke.

Die Sitzbuchse besteht vorzugsweise aus einem Werkstoff mit niedrigem Wärmeausdehnungskoeffizient, insbesondere aus ferritischem nichtrostenden Stahl mit einem Chromgehalt von 13 bis 17 %.

Zur weiteren Erläuterung der Erfindung wird auf die Ausführungsbeispiele der Zeichnung verwiesen, in deren
FIG 1 ein Sicherheits-Hochhubventil gemäß der Erfindung in einem Teilschnitt schematisch veranschaulicht ist.
FIG 2 zeigt die Umgebung der Sitzfläche in einem vergrößerten Ausschnitt aus der FIG 1. In
FIG 3 ist eine besonders bevorzugte Ausgestaltung der Sitzbuchse und des Isolierkörpers ebenfalls in einem Teilschnitt dargestellt, und
FIG 4 zeigt eine besonders vorteilhafte Ausgestaltung eines Verschlußstückes.

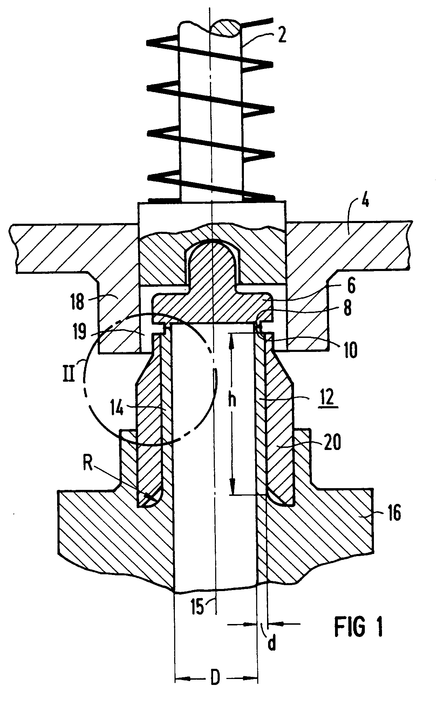

Gemäß **FIG 1** enthält ein Hochhub-Sicherheitsventil für Wasserdampf einen federbelasteten Kolben 2, der in einer Gleitbuchse 4 geführt ist und ein Verschlußstück 6 aufnimmt, das im geschlossenen Zustand mit seiner Sitzfläche 8 gegen die Sitzfläche 10 einer Sitzbuchse 12 gepreßt ist. Die Sitzbuchse 12 umfaßt einen Grundkörper 16, über den ein hohlzylindrisches Teil 14 hinausragt. Dieses hohlzylindrische Teil 14 trägt an seiner dem Verschlußstück 6 zugewandten Stirnfläche die Sitzfläche 10 und ist von einer Isolierhülse 20 umgeben, die sich bis zu dieser Stirnfläche erstreckt. Die Isolierhülse 20 besteht aus nichtrostendem Stahl und ist in einer hohlzylindrischen Ausnehmung des Grundkörpers 16 der Sitzbuchse 12 eingebettet und dort mit in der Figur nicht dargestellten Sicherungsstiften fixiert.

Im Bereich der Sitzfläche 10 sind die Sitzbuchse 12 und die Isolierhülse 20 von einem hohlzylindrischen Umlenkkörper 18 umgeben, der durch eine rohrförmige Verlängerung der Gleitbuchse 4 gebildet ist. Zwischen dem Umlenkkörper 18 und der Isolierhülse 20 entsteht ein hohlzylindrischer Strömungskanal 19. Der zwischen den Sitzflächen 8 und 10 im wesentlichen radial austretende Dampf wird vom Umlenkkörper 18 umgelenkt, und bewegt sich im Strömungskanal 19 in einer vom Verschlußstück 6 weggerichteten Strömung mit einer parallel zur Längsachse 15 der Sitzbuchse 12 gerichteten Geschwindigkeitskomponente entlang dem Außenmantel der die Sitzbuchse 12 umgebenden Isolierhülse 20. Durch das Umlenken des am Ventilsitz bei Ansprechdruck austretenden Dampfes in eine vom Verschlußstück 6 weggerichtete Strömung entsteht eine zusätzliche Kraftkomponente, die gegen die Wirkung des federbelasteten Kolbens 2 das Verschlußstück 6 weiter anhebt und zu einem sicheren und flatterfreien Ansprechen des Ventils bei Überdruck führt.

In der Figur 1 ist das Hochhub-Sicherheitsventil in einem geschlossenen Zustand dargestellt. Die Sitzbuchse 12 ist durch die Isolierhülse 20 thermisch von Strömungskanal 19 isoliert, so daß der an den Sitzflächen 8 und 10 austretende Leckdampf mit der Außenmantel der Sitzbuchse 12 praktisch nicht in Berührung kommt. Der durch isenthalpe Entspannung, beispielsweise von 175 bar auf 1 bar abgekühlte Dampf kann somit seine Kühlwirkung nicht unmittelbar an der Sitzbuchse 12 entfalten. Durch die Isolierhülse 20 wird der Wärmeübergang auf die Sitzbuchse 12 verringert und das Ausmaß der mechanischen Deformationen der Sitzbuchse 12 im Bereich der Sitzfläche 10 begrenzt.

Das hohlzylindrische Teil 14 der Sitzbuchse 12 ist lang und dünnwandig und aus einem Werkstoff mit niedriger Wärmeausdehnungszahl und geringer Wärmeleitfähigkeit, beispielsweise aus Stahl mit 13 - 17 % Chromgehalt, ausgeführt. Dadurch wird die Sitzbuchse 12 elastisch, so daß die mit der lokalen Unterkühlung einhergehende lokale axiale Schrumpfung kleiner ist als die durch den Dichtkraftüberschuß der Ventilfeder über die innendruckbedingte Kolbenkraft erzeugte elastische Zusammendrückung des hohlzylindrischen Teils 14 der Sitzbuchse 12 in axialer Richtung. Durch diese Maßnahme wird verhindert, daß durch eine auch bei Verwendung einer Isolierhülse nicht vermeidbare kleine lokale Abkühlung eine Erhöhung der Leckrate verursacht.

Für eine Sitzbuchse 12 aus Stahl ist es günstig, wenn für die Wandstärke d und den Innendurchmesser D des hohlzylindrischen Teils 14 die Beziehung 0,05 D ≦ d ≦ 0,2 D erfüllt ist. Die Länge h des hohlzylindrischen Teils 14 sollte dabei wenigstens 0,6 D, vorzugsweise mehr als 1,5 D betragen. Für einen Innendurchmesser D = 20 mm und bei einer Höhe h des zylindrischen Bereiches 14 von etwa 30 mm beträgt in einer besonders günstigen Ausführungsform die Wandstärke d etwa 2,5 mm. Am Übergang zum Grundkörper 16 wird zur Vermeidung von Kerbspannungen ein reichlicher Radius R angewendet, der vorzugsweise größer als d ist.

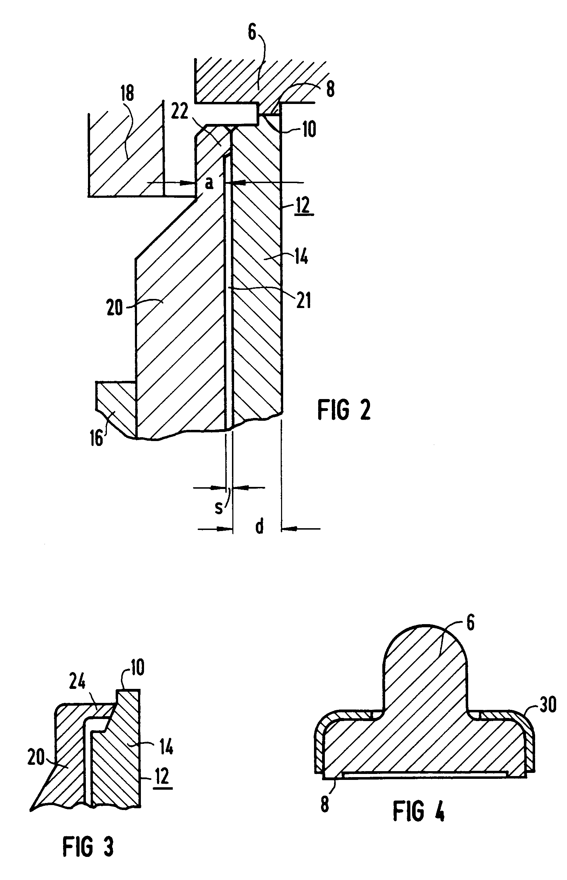

In der vergrößerten Darstellung gemäß **FIG 2** ist zwischen der Isolierhülse 20 und dem hohlzylindrischen Teil 14 der Sitzbuchse 12 ein Luftspalt 21 der Breite s zu erkennen. Diese Breite s ist größer als 0,02 mm, vorzugsweise größer als 0,10 mm. Im Bereich der Stirnfläche der Sitzbuchse 12 ist die Isolierhülse 20 mit einer Dichtlippe 22 in Form eines Innenbundes versehen, der formschlüssig mit der Außenwand der Sitzbuchse 12 in Verbindung steht. Diese Dichtlippe 22 verhindert, daß austretender Naßdampf in den hohlzylindrischen Spalt 21 eindringen kann.

Die Isolierhülse 20 ist in ihrem der Sitzfläche 10 zugewandten Bereich dünner als im übrigen Bereich und hat dort eine Wandstärke a, die vorzugsweise kleiner ist als die halbe Wandstärke d des hohlzyindrischen Teils 14 der Sitzbuchse 12. Dies ermöglicht einen federnden Paßsitz der Dichtlippe 22 am Außenumfang der Sitzbuchse 12 und eine gute Abdichtung des Luftspaltes 21. Außerdem verursacht eine lokale Abkühlung der Isolierhülse 20 im Bereich der Dichtlippe 22 eine radiale Kontraktion der Isolierhülse 20, so daß die Abdichtung in ihrer Wirksamkeit verbessert wird, ohne daß unzulässige Radialkräfte auf die Sitzbuchse 12 ausgeübt werden.

Gemäß der Ausführungsform nach **FIG 3** ist die Sitzbuchse 12 im Bereich der Sitzfläche 10 am Außenumfang mit einer Ausnehmung versehen, die bis zum Außenumfang der Sitzfläche 10 heranreicht. Die Isolierhülse 20 ist dort um die Sitzbuchse 12 herumgezogen, so daß sich eine Dichtlippe 24 ergibt, die bis auf die Sitzfläche 10 nahezu den gesamten Stirnbereich der Sitzbuchse 12 abdeckt und vor einer Abkühlung schützt. Dadurch ergibt sich eine besonders gute thermische Isolation der Sitzbuchse 12.

Entsprechend **FIG 4** ist auch das Verschlußstück 6 an seiner Außenoberfläche durch eine Kappe 30 thermisch isoliert. Zwischen der Kappe 30 und dem Verschlußstück 6 können außerdem in der Figur nicht dargestellte Luftspalte vorgesehen sein. Durch die Kappe 30 wird auch das Verschlußstück vor einer Abkühlung durch Leckdampf geschützt. Eine die Dichtwirkung vermindernde thermische Kontraktion oder Verwölbung des Verschlußstückes im Bereich der Stirnfläche wird durch diese Maßnahmen verringert.

## Patentansprüche

1. Sicherheitsventil für Wasserdampf mit einer Sitzbuchse (12) für ein axial verschiebbares Verschlußstück (6) und mit einem die Sitzbuchse (12) im Bereich ihrer Sitzfläche (10) umgebenden Strömungskanal,
**dadurch gekennzeichnet,**
daß zur thermischen Isolation der Sitzbuchse (12) vom Strömungskanal (19) zwischen dem Strömungskanal und der Sitzbuchse eine Isolierhülse (20) vorgesehen ist, und daß zwischen der Isolierhülse und der Sitzbuchse ein Luftspalt (21) vorgesehen ist.

2. Sicherheitsventil nach Anspruch 1,
**dadurch gekennzeichnet,**
daß der Strömungskanal (19) durch einen die Sitzbuchse (12) im Bereich ihrer Sitzfläche (10) umgebenden Umlenkkörper (18) gebildet wird, der den an der Sitzfläche (10) austretenden Dampf in eine Strömung mit einer parallel zur Längsachse (15) der Sitzbuchse (12) gerichteten Strömungskomponente umlenkt.

3. Sicherheitsventil nach Anspruch 1 oder 2,
**dadurch gekennzeichnet,**
daß der Luftspalt (21) vom Strömungskanal (19) durch eine Dichtlippe (22) getrennt ist.

4. Sicherheitsventil nach Anspruch 3,
**dadurch gekennzeichnet,**
daß die Dichtlippe (22) durch einen Bund am Innenrand der Isolierhülse (20) gebildet ist.

5. Sicherheitsventil nach Anspruch 3 oder 4,
**dadurch gekennzeichnet,**
daß die Wandstärke (a) der Isolierhülse (20) an ihrem der Dichtlippe (22) zugewandten Ende kleiner ist als im restlichen Bereich.

6. Sicherheitsventil nach Anspruch 5,
**dadurch gekennzeichnet,**
daß die Wandstärke (a) der Isolierhülse (20) an ihrem der Dichtlippe (22) zugewandten Ende kleiner ist als die halbe Wandstärke (d) der Sitzbuchse (12) an ihrem dem Verschlußstück (6) zugewandten Ende (14).

7. Sicherheitsventil nach Anspruch 6,
**dadurch gekennzeichnet,**
daß die Isolierhülse (20) bis zum Außenumfang der Sitzfläche (10) um die Stirnfläche der Sitzbuchse (12) herumgezogen ist.

8. Sicherheitsventil nach einem der vorhergehenden Ansprüche,
**dadurch gekennzeichnet,**
daß Mittel zur thermischen Isolation des Verschlußstückes (6) vorgesehen sind.

9. Sicherheitsventil nach einem der vorhergehenden Ansprüche,
**dadurch gekennzeichnet,**
daß die Sitzbuchse (12) einen die Sitzfläche (10) tragenden hohlzylindrischen Teil (14) umfaßt, dessen Höhe (h) wenigstens das 0,6-fache seines Innendurchmessers (D) und dessen Wandstärke weniger als das 0,2-fache seines Innendurchmessers (D) beträgt.

10. Sicherheitsventil nach Anspruch 9,
**dadurch gekennzeichnet,**
daß der hohlzylindrische Teil (14) in einen Grundkörper (16) mit einem Übergangsradius (R) übergeht, der größer ist als seine Wandstärke (d).

11. Sicherheitsventil nach einem der Ansprüche 1 bis 10,
**dadurch gekennzeichnet,**
daß die Sitzbuchse (12) aus einem Werkstoff mit niedrigem Wärmeausdehnungskoeffizient, insbesondere aus ferritischem nichtrostenden Stahl mit einem Chromgehalt von 13 bis 17 %, besteht.

## Claims

1. Safety valve for water vapour having a seat bushing (12) for an axially displaceable closure piece (6) and having a flow channel surrounding the seat bushing (12) in the region of its seat surface (10), characterized in that for the thermal insulation of the seat bushing (12) from the flow channel (19) an insulating sleeve (20) is provided between the flow channel and the seat bushing and in that an air gap (21) is provided between the insulating sleeve and the seat bushing.

2. Safety valve according to claim 1, characterized in that the flow channel (19) is formed by a deflection body (18) surrounding the seat bushing (12) in the region of its seat surface (10), the deflection body deflecting the vapour issuing at the seat surface (10) into a flow with a flow component directed parallel to the longitudinal axis (15) of the seat bushing (12).

3. Safety valve according to claim 1 or 2, characterized in that the air gap (21) is separated from the flow channel (19) by a sealing lip (22).

4. Safety valve according to claim 3, characterized in that the sealing lip (22) is formed by a band at the inner edge of the insulating sleeve (20).

5. Safety valve according to claim 3 or 4, characterized in that the wall thickness (a) of the insulating sleeve (20) is smaller at its end facing the sealing lip (22) than in the remaining region.

6. Safety valve according to claim 5, characterized in that the wall thickness (a) of the insulating sleeve (20) is smaller at its end facing the sealing lip (22) than half the wall thickness (d) of the seat bushing (12) at its end (14) facing the closure piece (6).

7. Safety valve according to claim 6, characterized in that the insulating sleeve (20) up to the outer circumference of the seat surface (10) is pulled about the front surface of the seat bushing (12).

8. Safety valve according to one of the preceding claims, characterized in that means are provided for the thermal insulation of the closure piece (6).

9. Safety valve according to one of the preceding claims, characterized in that the seat bushing (12) encloses a hollow-cylindrical part (14) supporting the seat surface (10), the height (h) of which part amounts to at least 0.6 times its inner diameter (D) and the wall thickness of which part amounts to less than 0.2 times its inner diameter (D).

10. Safety valve according to claim 9, characterized in that the hollow-cylindrical part (14) passes over into a base body (16) with a transition radius (R) which is greater than its wall thickness (d).

11. Safety valve according to one of claims 1 to 10, characterized in that the seat bushing (12) consists of a material with low coefficient of thermal expansion, in particular of ferritic, non-rusting steel with a chromium content of 13 to 17%.

## Revendications

1. Soupape de sécurité pour la vapeur d'eau, comportant une douille formant siège (12) pour un élément de fermeture (6) déplaçable axialement, et un canal d'écoulement entourant la douille formant siège (12) au niveau de sa surface d'appui (10), caractérisée par le fait que pour l'isolation thermique de la douille formant siège (12) vis-à-vis du canal d'écoulement (19), une douille isolante (20) est disposée entre le canal d'écoulement et la douille formant siège, et qu'une fente d'air (21) est prévue entre la douille isolante et la douille formant siège.

2. Soupape de sécurité suivant la revendication 1, caractérisée par le fait que le canal d'écoulement (19) est formé par un corps de déviation (18) qui entoure la douille formant siège (12) au niveau de sa surface d'appui (10) et qui fait dévier la vapeur, qui sort au niveau de la surface de siège (10), pour former un écoulement possédant une composante d'écoulement dirigée parallèlement à l'axe longitudinal (15) de la douille formant siège (12).

3. Soupape de sécurité suivant la revendication 1 ou 2, caractérisée par le fait que la fente d'air (21) est séparée du canal d'écoulement (19) par une lèvre d'étanchéité (22).

4. Soupape de sécurité suivant la revendication 3, caractérisée par le fait que la lèvre d'étanchéité (22) est formée par un collet situé sur le bord intérieur de la douille isolante (20).

5. Soupape de sécurité suivant la revendication 3 ou 4, caractérisée par le fait que l'épaisseur de paroi (a) de la douille isolante (20) est plus petite, au niveau de son extrémité tournée vers la lèvre d'étanchéité (22), qu'ailleurs.

6. Soupape de sécurité suivant la revendication 5, caractérisée par le fait que l'épaisseur (a) de la paroi de la douille isolante (20) sur son extrémité tournée vers la lèvre d'étanchéité (22) est inférieure à la moitié de l'épaisseur (d) de la paroi de la douille formant siège (12) sur son extrémité (14) tournée vers l'élément de fermeture (6).

7. Soupape de sécurité suivant la revendication 6, caractérisée par le fait que la douille isolante (20) s'étend autour de la surface frontale de la douille formant siège (12) jusqu'à la périphérie extérieure de la surface d'appui (10).

8. Soupape de sécurité suivant l'une des revendications précédentes, caractérisée par le fait que des moyens sont prévus pour réaliser l'isolation thermique de l'élément de fermeture (6).

9. Soupape de sécurité suivant l'une des revendications précédentes, caractérisée par le fait que la douille formant siège (12) comprend une partie en forme de cylindre creux (14) qui porte la surface d'appui (10) et dont la hauteur (h) est égale au moins à 0,6 fois son diamètre intérieur (D) et dont l'épaisseur de paroi est inférieure à 0,2 fois son diamètre intérieur (D).

10. Soupape de sécurité suivant la revendication 9, caractérisée par le fait que la pièce en forme de cylindre creux (14) se prolonge par un corps de base (16) possédant un rayon de transition (R), qui est supérieur à l'épaisseur (d) de la paroi de cette pièce.

11. Soupape de sécurité suivant l'une des revendications 1 à 10, caractérisée par le fait que la douille formant siège (12) est réalisée en un matériau qui possède un faible coefficient de dilatation thermique, notamment en acier ferritique inoxydable possédant une teneur en chrome comprise entre 13 et 17 %.
